# EUROPEAN PATENT SPECIFICATION

(11) **EP 3 226 620 B1**
(45) Date of publication and mention of the grant of the patent: **17.10.2018**
(21) Application number: 17154963.7
(22) Date of filing: 07.02.2017
(51) Int. Cl.: H04W 48/08, H04W 76/30

(54) **A METHOD AND A DEVICE FOR IMPROVING THE DETECTION OF A NEIGHBORING CELL IN A CELL RESELECTION PROCESS**
VERFAHREN UND VORRICHTUNG ZUR VERBESSERUNG DER DETEKTION EINER NACHBARZELLE IN EINEM ZELLENNEUAUSWAHLVERFAHREN
PROCÉDÉ ET DISPOSITIF POUR AMÉLIORER LA DÉTECTION D'UNE CELLULE VOISINE DANS UN PROCESSUS DE RESÉLECTION DE CELLULES

(30) Priority: 30.03.2016 CN 201610192068
(43) Date of publication of application: 04.10.2017
(73) Proprietor: Beijing Xiaomi Mobile Software Co., Ltd., Beijing 100085 (CN)
(72) Inventor: CUI, Hengbin, Beijing, Beijing 100085 (CN); ZHANG, Guoquan, Beijing, Beijing 100085 (CN); SUN, Long, Beijing, Beijing 100085 (CN)
(74) Representative: Sackin, Robert

(56) References cited:
- WO-A2-2012/138283
- US-A1- 2012 094 679
- "3RD GENERATION PARTNERSHIP PROJECT; TECHNICAL SPECIFICATION GROUP RADIO ACCESS NETWORK; EVOLVED UNIVERSAL TERRESTRIAL RADIO ACCESS; USER EQUIPMENT PROCEDURES IN IDLE MODE (RELEASE 9)", 3RD GENERATION PARTNERSHIP PROJECT (3GPP); TECHNICALSPECIFICATION (TS), XX, XX , no. TS 36.304 V9.4.0 1 September 2010 (2010-09-01), pages 1-32, XP002667364, Retrieved from the Internet: URL:http://www.3gpp.org/ftp/Specs/archive/ 36_series/36.304/36304-940.zip [retrieved on 2012-01-19]

## Description

### FIELD

The present disclosure relates to the technical field of mobile communication, and more particularly to a method and device for detecting a neighboring cell in a cell reselection process.

### BACKGROUND

In a mobile communication network, a User Equipment (UE) usually performs cell reselection in an idle state to ensure that it resides in a cell with better signal, while neighboring cell detection is a precondition for the cell reselection.

In the current technologies, a UE will perform the neighboring cell detection according to frequency bands configured by the system when the UE is in an idle state, i.e., monitor the signal quality on the other frequency bands other than the frequency bands corresponding to the currently resident cell in the various frequency bands configured by the system, and the UE will switch to other cells corresponding to the frequency bands with better signal quality if the signal quality of the other frequency bands is continuously better than that of the current cell. In practical applications, based on the purpose of load balance, the system may designate the UE by dedicated signaling to detect signal quality on only a few frequency bands.

In the process of implementing the present disclosure, the following problems are found in the current technologies:

The duration of the dedicated signaling is usually very long, and the dedicated signaling has not expired when the UE moves fast to a remote location and accesses a new cell, while the frequency band of the neighboring cell of that cell and the frequency band designated by the system to detect signal quality are different, resulting in that the UE is not able to detect a neighboring cell successfully.

US patent application with publication No. US2012/094679 discloses various methods to address some of the current issues in selecting a carrier frequency. In particular, when the mobile is about to disconnect from the base station and transition back to RRC Idle mode, the procedure in 3GPP LTE is that the base station sends the mobile an RRC connection release message. The RRC connection release message contains in it an IdleModeMobilityControlInfo information element, of which one element is freqPriorityListEUTRA. This is a list of carrier frequencies with associated priorities which the mobile should scan for when it goes back into RRC idle mode.

International patent application with publication No. WO2012/138283 discloses methods and devices for handling inter RAT mobility. In particular, the UE receives a RRC Connection Release message, and the message comprises redirection information, the UE then idle mode and starts to search for a suitable cell among the E-UTRA frequencies listed in the redirection info.

3GPP TS 36.304 V9.4.0, 1 September 2010 discloses 3GPP technical specification. In particular, it discloses that on transition from RRC_CONNECTED to RRC _IDLE, UE shall attempt to camp on suitable cell according to *redirectedCarrierInfo,* if included in the *RRCConnectionRelease* message.

### SUMMARY

The present invention includes a method performed by a user equipment for improving the detection of a neighbouring cell in a cell reselection process according to claim 1, and a corresponding device according to the independent claim 4. Advantageous embodiments are defined in the dependent claims.

The embodiments and/or examples of the following description which are not covered by the appended claims are considered as not being part of the present invention.

A method and device for detecting a neighboring cell in the cell reselection process is provided in the embodiments of the present disclosure. The technical solutions are as follows:

In accordance with the first aspect of the embodiments of the present disclosure, a method used in a user equipment for detecting a neighboring cell in the cell reselection process is provided, the method may comprise: receiving a first message to indicate the user equipment to switch from connected state to idle state, and the first message may comprise a first frequency band group which may comprise at least one frequency band; updating a second frequency band group which has been stored in the user equipment according to the first frequency band group; detecting a neighboring cell on the at least one frequency band in the updated second frequency band group when performing cell reselection.

Alternatively, the first message may further comprise: a priority of the at least one frequency band, and the detecting a neighboring cell on the at least one frequency band in the updated second frequency band group may comprise: detecting a neighboring cell on the at least one frequency band according to the priority of the at least one frequency band.

Alternatively, the first frequency band group may comprise general frequency bands which may comprise various frequency bands that are not designated by a system for the user equipment to detect a neighboring cell, and the updating a second frequency band group which has been stored in the user equipment according to the first frequency band group may comprise: updating general frequency bands in the second frequency band group according to the general frequency bands in the first frequency band group if the second frequency band group comprises general frequency bands; updating the general frequency bands in the second frequency band group according to the general frequency bands in the first frequency band group and deleting the dedicated frequency bands in the second frequency band group if the second frequency band group comprises general and dedicated frequency bands, the dedicated frequency bands may comprise various frequency bands designated by the system for the user equipment to detect a neighboring cell.

Alternatively, the first frequency band group may comprise general and dedicated frequency bands, the general frequency bands may comprise various frequency bands that are not designated by a system for the user equipment to detect a neighboring cell, and the dedicated frequency bands may comprise various frequency bands designated by the system for the user equipment to detect a neighboring cell, and the updating the second frequency band group that has been stored in the user equipment according to the first frequency band group may comprise: adding the dedicated frequency bands in the first frequency band group to the second frequency band group and updating the general frequency bands in the second frequency band group according to the general frequency bands in the first frequency band group if the second frequency band group comprises general frequency bands; updating the general and dedicated frequency bands in the second frequency band group according to the general and dedicated frequency bands in the first frequency band group respectively if the second frequency band group comprises general and dedicated frequency bands.

Alternatively, the first message may be a radio resource control connection release (RRC Connection Release) message.

In accordance with the second aspect of embodiments of the present disclosure, a method used in base station for detecting a neighboring cell in the cell reselection process is provided, the method may comprise: detecting whether a user equipment satisfies a condition to switch from connected state to idle state; sending the user equipment a first message which indicates the user equipment to switch from connected state to idle state if the user equipment satisfies the condition to switch from connected state to idle state, the first message may comprise a first frequency band group which may comprise at least one frequency band;

Alternatively, the first message may be a radio resource control connection release (RRC Connection Release) message.

In accordance with the third aspect of the embodiments of the present disclosure, a device used in user equipment for detecting a neighboring cell in the cell reselection process is provided, the device may comprise: a receiving module configured to receive a first message to indicate the user equipment to switch from connected state to idle state, the first message may comprise a first frequency band group which may comprise at least one frequency band; an updating module configured to update a second frequency band group that has been stored in the user equipment according to the first frequency band group; a detecting module configured to detect a neighboring cell on the at least one frequency band in the updated second frequency band group when performing cell reselection.

Alternatively, the first message received by the receiving module may further comprise: a priority of the at least one frequency band, and the device may comprise: the detecting module may further configured to detect a neighboring cell on the at least one frequency band according to the priority of the at least one frequency band.

Alternatively, the updating module may comprise: a first updating sub-module configured to: update general frequency bands in the second frequency band group according to general frequency bands in the first frequency band group, if the second frequency band group comprises general frequency bands while the first frequency band group comprises general frequency bands, the general frequency bands may comprise various frequency bands that are not designated by a system for the user equipment to detect a neighboring cell; a second updating sub-module configured to: update the general frequency bands in the second frequency band group according to the general frequency bands in the first frequency band group and delete dedicated frequency bands in the second frequency band group, if the second frequency band group comprises general and dedicated frequency bands while the first frequency band group comprises general frequency bands, the dedicated frequency bands may comprise various frequency bands designated by the system for the user equipment to detect a neighboring cell.

Alternatively, the updating module may comprise: a third updating sub-module configured to: add the dedicated frequency bands in the first frequency band group to the second frequency band group and update the general frequency bands in the second frequency band group according to the general frequency bands in the first frequency band group, if the second frequency band group information comprises general frequency bands while the first frequency band group information comprises general and dedicated frequency bands, the general frequency bands may comprise various frequency bands that are not designated by a system for the user equipment to detect a neighboring cell, and the dedicated frequency bands may comprise various frequency bands designated by the system for the user equipment to detect a neighboring cell; a fourth updating sub-module configured to: update the general and dedicated frequency bands in the second frequency band group according to the general and dedicated frequency bands in the first frequency band group respectively, if the second frequency band group comprises general and dedicated frequency bands while the first frequency band group information comprises general and dedicated frequency bands.

Alternatively, the first message may be a radio resource control connection release (RRC Connection Release) message.

In accordance with the fourth aspect of the embodiments of the present disclosure, a device used in base station for detecting a neighboring cell in the cell reselection process is provided, the device may comprise: a switch detecting module configured to detect whether a user equipment satisfies a condition to switch from connected state to idle state; a sending module configured to send the user equipment a first message which indicates the user equipment to switch from connected state to idle state if the user equipment satisfies the condition to switch from connected state to idle state, and the first message may comprise a first frequency band group which may comprise at least one frequency band.

Alternatively, the first message in the device may be a radio resource control connection release (RRC Connection Release) message.

In accordance with the fifth aspect of the embodiments of the present disclosure, a device used in user equipment for detecting a neighboring cell in the cell reselection process is provided, the device may comprise: a processor; a memory for storing processor-executable instructions; wherein the processor may be configured to: receive a first message to indicate the user equipment to switch from connected state to idle state, the first message comprising a first frequency band group which comprises at least one frequency band; update a second frequency band group which has been stored in the user equipment according to the first frequency band group; detect a neighboring cell on the at least one frequency band in the updated second frequency band group when performing cell reselection.

In accordance with the sixth aspect of the embodiments of the present disclosure, a device used in base station for detecting a neighboring cell in the cell reselection process is provided, the device may comprise: a processor; a memory for storing processor-executable instructions; wherein the processor may be configured to: detect whether the user equipment satisfies a condition to switch from connected state to idle state; send the user equipment a first message which indicates the user equipment to switch from connected state to idle state if the user equipment satisfies the condition to switch from connected state to idle state, the first message may comprise a first frequency band group which may comprise at least one frequency band.

The technical solutions provided by embodiments of the present disclosure may comprise the following beneficial effects:

By receiving a first message to indicate the user equipment to switch from connected state to idle state, wherein the first message comprises a first frequency band group which comprises at least one frequency band; updating a second frequency band group which has been stored in the user equipment according to the first frequency band group; and detecting a neighboring cell on the at least one frequency band in the updated second frequency band group when performing cell reselection, the present disclosure solves the problem in practical applications that the UE cannot detect a neighboring cell after the UE moves fast to a remote location and accesses a new cell resulting from the dedicated signaling that designates the UE to detect signal quality on a few frequency bands has not expired while the frequency band of the neighboring cell of that cell and the frequency band designated by the dedicated signaling to detect signal quality are different, improves the success rate that a neighboring cell is detected by the UE and ensures the stability of the communication connection of the UE and a system.

It is to be understood that the forgoing general description and the following detailed description are illustrative and explanatory only, and are not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the present disclosure.
Fig. 1 is a schematic diagram illustrating the practice environment involved by a method for detecting a neighboring cell in the cell reselection process according to an exemplary embodiment;
Fig. 2 is a flow chart illustrating a method for detecting a neighboring cell in the cell reselection process according to an exemplary embodiment;
Fig. 3 is a flow chart illustrating a method for detecting a neighboring cell in the cell reselection process according to an exemplary embodiment;
Fig. 4 is a flow chart illustrating a method for detecting a neighboring cell in the cell reselection process according to an exemplary embodiment;
Fig. 5 is a block diagram illustrating a device for detecting a neighboring cell in the cell reselection process according to an exemplary embodiment;
Fig. 6 is a block diagram illustrating a device for detecting a neighboring cell in the cell reselection process according to an exemplary embodiment; and
Fig. 7 is a block diagram illustrating a device according to an exemplary embodiment.

### DETAILED DESCRIPTION

Exemplary embodiments will now be illustrated in detail, examples of which are illustrated in the accompanying drawings. When the following description refers to the accompanying drawings, the same numbers in different drawings represent the same or similar elements, unless otherwise described. The implementations described in the following exemplary embodiments do not represent all of the implementations consistent with the present disclosure. Instead, they are only examples of devices and methods consistent with aspects of the present disclosure as recited in the appended claims.

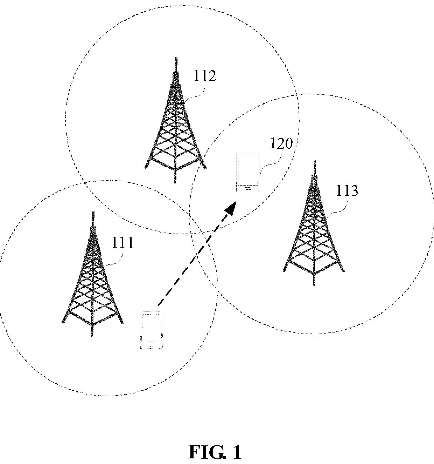

Fig. 1 is a schematic diagram illustrating the practice environment involved by a method for detecting a neighboring cell in the cell reselection process according to the present disclosure. The practice environment may comprise: a base station 111, a base station 112, a base station 113 and a user equipment 120.

The base station 111, base station 112 and base station 113 may be communication cell base stations which provide mobile communication services. In a cellular communication network, one base station may support one or more communication cells, and the communication cells supported by a number of base stations may constitute a communication network. Each base station may provide communication service of a specific frequency band to the user equipment 120 within a certain range in which the base station is the center, for example, in Fig. 1, the range covered by a dotted line circle in which the base station is the center may be the communication range of that base station. The base station may communicate with the user equipment 120 by wireless signals.

For example, the base stations in Fig. 1 may comprise: the base station 111, the base station 112 and the base station 113. Each base station and the cell frequency band supported by the base stations respectively may have the following correspondence relationships: the frequency band of the cell supported by the base station 111 is A₀₁, the frequency band of the cell supported by the base station 112 is A₀₂, and the frequency band of the cell supported by the base station 113 is A₀₃. The present embodiment is only to illustrate an implementation in which the present disclosure may be implemented, and is not intended to limit the number of base stations, cover range of the signal and the layout location relationship.

Referring to Fig. 1, the user equipment may use frequency band A₀₁ to access the base station 111 if the user equipment 120 is in the communication range covered by the base station 111; when the user equipment 120 moves from a location covered by the base station 111 (terminal shape illustrated by the dotted line block in Fig. 1) to a location covered by the based station 112 and base station 113 simultaneously, the system may switch the service base station of the user equipment to the base station 112 or 113 based on the factors such as load optimize configuration. The system may send a first message to the user equipment if the system switches the user equipment from connected state to idle state at that time. Then the user equipment may start to detect a neighboring cell, detect signal strength of the frequency band stored in the second frequency band group according to the second frequency band group in the user equipment updated by the first message, and select the cell with stronger signal to access network.

The user equipment 120 may be a device which may communicate with the base station 111, base station 112 and base station 113 and access cellular communication network, such as a cell phone, laptop, tablet, wearable smart device, on-board computer or smart aircraft.

The base station 111, base station 112, base station 113 and user equipment 120 in the present embodiment may be applied to cellular communication networks including but not limited to: networks satisfying Long Term Evolution (LTE) or Long Term Evolution Advanced (LTE-Advanced) mobile communication standard, networks using Voice on Long Term Evolution (VoLTE) technology.

Taking the practice environment shown in Fig. 1 as example, the technical solutions provided by various embodiment of the present disclosure are introduced and illustrated in the following.

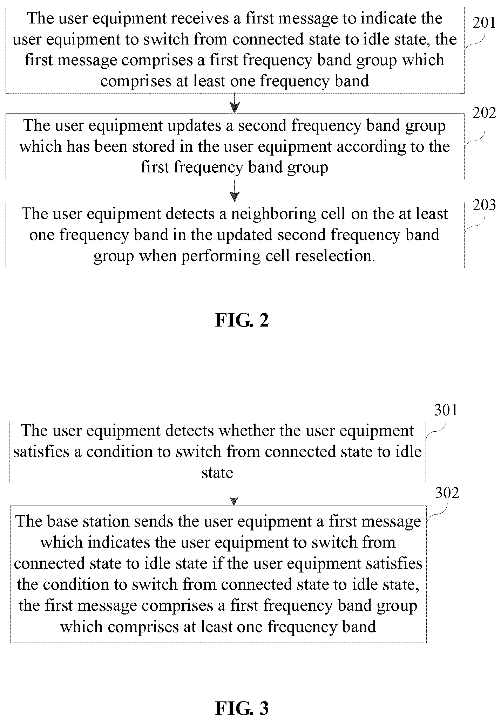

Fig. 2 is a flow chart illustrating a method for detecting a neighboring cell in the cell reselection process according to an exemplary embodiment. The method may be applied in the user equipment 120 of the practice environment as shown in Fig. 1. The method for detecting a neighboring cell in the cell reselection process may include the following several steps.

In step 201, the user equipment may receive a first message to indicate the user equipment to switch from connected state to idle state, and the first message may comprise a first frequency band group which may comprise at least one frequency band.

In step 202, the user equipment may update a second frequency band group which has been stored in the user equipment according to the first frequency band group.

In step 203, the user equipment may detect a neighboring cell on the at least one frequency band in the updated second frequency band group when performing cell reselection.

In summary, a method for detecting a neighboring cell in the cell reselection process is provided in the embodiments of the present disclosure. The user equipment may receive a first message to indicate the user equipment to switch from connected state to idle state, and the first message may comprise a first frequency band group which may comprise at least one frequency band; the user equipment may update a second frequency band group which has been stored in the user equipment according to the first frequency band group; the user equipment may detect a neighboring cell on the at least one frequency band in the updated second frequency band group when performing cell reselection. The method solves the problem in practical applications that the UE cannot detect a neighboring cell after the UE moves fast to a remote location and accesses a new cell resulting from the dedicated signaling that designates the UE to detect signal quality on a few frequency bands has not expired while the frequency band of the neighboring cell of that cell and the frequency band designated by the dedicated signaling to detect signal quality are different, improves the success rate that a neighboring cell is detected by the UE and ensures the stability of the communication connection of the UE and a system.

Fig. 3 is a flow chart illustrating a method for detecting a neighboring cell in the cell reselection process according to an exemplary embodiment. That method may be applied in the base station of the practice environment as shown in Fig. 1, and the base station may be any one or more of the base station 111, base station 112 and base station 113. The method for detecting a neighboring cell in the cell reselection process may include the following several steps.

In step 301, the base station may detect whether the user equipment satisfies a condition to switch from connected state to idle state.

In step 302, the base station may send the user equipment a first message which indicates the user equipment to switch from connected state to idle state if the user equipment satisfies the condition to switch from connected state to idle state, the first message may comprise a first frequency band group which may comprise at least one frequency band.

In summary, a method for detecting a neighboring cell in the cell reselection process is provided in the embodiments of the present disclosure. The base station may detect whether the user equipment satisfies a condition to switch from connected state to idle state; the base station may send the user equipment a first message which indicates the user equipment to switch from connected state to idle state if the user equipment satisfies the condition to switch from connected state to idle state, the first message may comprise a first frequency band group which may comprise at least one frequency band. The method solves the problem in practical applications that the UE cannot detect a neighboring cell after the UE moves fast to a remote location and accesses a new cell resulting from the dedicated signaling that designates the UE to detect signal quality on a few frequency bands has not expired while the frequency band of the neighboring cell of that cell and the frequency band designated by the dedicated signaling to detect signal quality are different, improves the success rate that a neighboring cell is detected by the UE and ensures the stability of the communication connection of the UE and a system.

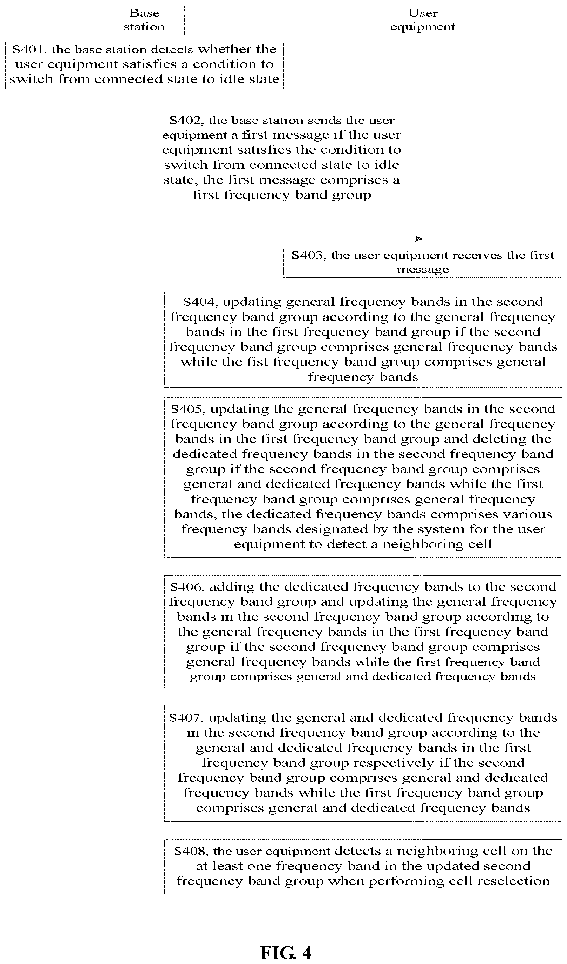

Fig. 4 is a flow chart illustrating a method for detecting a neighboring cell in the cell reselection process according to another exemplary embodiment. Illustrating by example of applying the method in the practice environment of Fig. 1 and referring to Fig. 4, the method may include the following several steps.

In step 401, the base station may detect whether the user equipment satisfies a condition to switch from connected state to idle state.

The switch from connected state to idle state of the user equipment may be implemented through sending a radio signal indication by the base station. For example, if there is no data exchange between the user equipment and the base station and the situation lasts for a period of time, the base station may consider that the user equipment may switch from connected state to idle state. Otherwise, the user equipment and the base station may still keep a communication connection and the user equipment may be in connected state. The data exchange packet between the user equipment and the base station comprises but not limited to: the data packet generated when the user equipment accesses the network, or voice data packet exchanged by the user equipment with other devices. For example, the data packet generated when a user uses a user equipment to access the network, or data packet generated when a user uses a user equipment to make a voice call, video call to other users.

In step 402, the base station may send the user equipment a first message if the user equipment satisfies the condition to switch from connected state to idle state, the first message may comprise a first frequency band group which may comprise at least one frequency band.

The first message may be configured to indicate the user equipment to switch from connected state to idle state, and the first frequency band group may comprise at least one frequency band.

When the user equipment accesses a cell supported by a base station, the user equipment may enter connected state and idle state according to whether to exchange data with the base station. The user equipment may be in connected state to keep the network connection if the user equipment exchanges data with the base station. After the data exchange between the user equipment in connected state and the base station is finished, the base station may send a first message to the user equipment. The user equipment may receive the first message from the base station which contains an instruction that indicates the user equipment to switch from connected state to idle state. The user equipment may switch from connected state to idle state according to the instruction to save power and release the occupied communication resource.

In the embodiments of the present disclosure, when the base station sends a first message to the user equipment, the first message may carry a first frequency band group which contains at least one frequency band. The at least one frequency band may select as many frequency bands as possible for the purpose of ensuring that the user equipment may detect all of the frequency bands when detecting a neighboring cell. For example, there are total twenty frequency bands which provide network service in a communication system, the at least one frequency band in the present disclosure may comprise a majority or all of these twenty frequency bands, or there are total twenty frequency bands which provide network service in the system, and ten of them cover the current location of the user equipment, then the foregoing at least one frequency band may comprise a majority or all of these ten frequency bands which cover the current location of the user equipment.

In step 403, the user equipment may receive the first message.

When the user equipment detects a neighboring cell in the cell reselection process, the frequency bands contained in a second frequency band group that are stored locally and used to detect a neighboring cell may comprise the following two kinds of frequency bands: one kind is the various frequency bands that are not designated by a system for the user equipment to detect a neighboring cell. The frequency band packet consisting of these various frequency bands that are not designated by a system for the user equipment to detect a neighboring cell may be called general frequency bands, which may be captured and updated through the broadcast message sent by the base station. The other kind is the various frequency bands designated by the system for the user equipment to detect a neighboring cell, which may be called dedicated frequency bands and sent by the base station through a dedicated signaling. For example, based on the purpose of load balance, the base station may send a dedicated signaling which contains dedicated frequency bands to the user equipment. The dedicated signaling may have a valid time limit which may be used to indicate the user equipment to omit the general frequency bands within the valid time limit and detect a neighboring cell according to the dedicated frequency bands contained in the dedicated signaling. The dedicated frequency bands may expire after the valid time limit is reached, and the user equipment may turn to use the general frequency bands to detect a neighboring cell until the next dedicated signaling is received. Usually, the dedicated frequency bands contained in the dedicated signaling received by the user equipment may be a part of the general frequency bands stored locally by the user equipment, or the dedicated frequency bands contained in the dedicated signaling may partly overlap with the general frequency bands stored locally by the user equipment. For example, at some point, the general frequency bands in the second frequency band group stored locally may comprise four frequency bands a, b, c and d, then the dedicated signaling received by the user equipment may comprise only frequency bands a and b, or may also comprise frequency bands a and f.

In the embodiments of the present disclosure, the frequency band group in the first message may comprise only the general frequency bands, or both the general and dedicated frequency bands. Under these two circumstances, the process that the user equipment updates the second frequency band group stored locally according to the first frequency band group may be shown as the following steps 404, 405,406 or 407.

In step 404, the general frequency bands in the second frequency band group may be updated according to the general frequency bands in the first frequency band group if the second frequency band group comprises general frequency bands while the first frequency band group comprises general frequency bands.

The user equipment may update the general frequency bands in the second frequency band group stored locally as the general frequency bands in the first frequency band group carried by the first message directly, if the first frequency band group received by the user equipment comprise only the general frequency bands while the second frequency band group stored locally by the user equipment also comprises only the general frequency bands.

When the user equipment moves to a new area and the general frequency bands in the second frequency band group stored locally has not been updated according to the broadcast message sent by the base station, if the cell reselection is performed at this time, it is possible that the neighboring cell corresponding to the general frequency bands stored locally may not be detected, resulting in that the cell reselection cannot be performed. In the embodiments of the present disclosure, the base station may send the first message to the user equipment when detecting the user equipment enters idle state, and the user equipment may update the general frequency bands stored locally according to the general frequency bands in the first message to ensure that the user equipment may detect a neighboring cell successfully.

In step 405, the general frequency bands in the second frequency band group may be updated according to the general frequency bands in the first frequency band group and the dedicated frequency bands in the second frequency band group may be deleted, if the second frequency band group comprises general and dedicated frequency bands while the first frequency band group comprises general frequency bands, the dedicated frequency bands may comprise various frequency bands designated by the system for the user equipment to detect a neighboring cell.

The user equipment may update the general frequency bands in the second frequency band group stored locally as the general frequency bands in the first frequency band group carried by the first message directly and delete the original dedicated frequency bands in the second frequency band group, if the first frequency band group received by the user equipment comprises only the general frequency bands while the second frequency band group stored locally by the user equipment comprises both the general and dedicated frequency bands.

When the user equipment moves to a new area and the dedicated frequency bands in the second frequency band group have not expired, if cell reselection is performed at this time, even if the general frequency bands in the second frequency band group is updated timely, the user terminal may also ignore the general frequency bands and use the unexpired dedicated frequency bands to detect a neighboring cell. It is possible that the neighboring cell corresponding to dedicated frequency bands may not be detected, resulting in that the cell reselection cannot be performed. In the embodiments of the present disclosure, after the first message is received, in addition to updating the general frequency bands stored locally according to the general frequency bands in the first message, the user equipment may also delete the unexpired dedicated frequency bands if the user equipment stores the unexpired dedicated frequency bands locally, in order to ensure that the user equipment may use the updated general frequency bands timely to detect a neighboring cell.

In step 406, the dedicated frequency bands may be added to the second frequency band group and the general frequency bands in the second frequency band group may be updated according to the general frequency bands in the first frequency band group, if the second frequency band group comprises the general frequency bands while the first frequency band group comprises the general and dedicated frequency bands.

The user equipment may update the general frequency bands in the second frequency band group stored locally as the general frequency bands in the first frequency band group carried by the first message, and add the dedicated frequency bands in the first frequency band group carried by the first message to the second frequency band group, if the first frequency band group received by the user equipment comprises the general and dedicated frequency bands while the second frequency band group stored locally by the user equipment comprises only the general frequency bands.

In step 407, the general and dedicated frequency bands in the second frequency band group may be updated according to the general and dedicated frequency bands in the first frequency band group respectively, if the second frequency band group comprises the general and dedicated frequency bands while the first frequency band group comprises the general and dedicated frequency bands.

The user equipment may update the general frequency bands in the second frequency band group stored locally as the general frequency bands in the first frequency band group carried by the first message, and update the dedicated frequency bands in the second frequency band group stored locally as the dedicated frequency bands in the first frequency band group carried by the first message, if the first frequency band group received by the user equipment comprises the general and dedicated frequency bands while the second frequency band group stored locally by the user equipment also comprises the general and dedicated frequency bands.

When the user equipment moves to a new area, based on the purpose of network load balance, in addition to carrying the general frequency bands in the first frequency band group of the first message, the base station may also carry the dedicated frequency bands in the first frequency band group to indicate the user equipment to detect a neighboring cell on the dedicated frequency bands. The dedicated frequency bands in the first frequency band group carried by the first message may also have a corresponding valid time limit, and after the valid time limit is reached, the user equipment may turn to use the general frequency bands to detect a neighboring cell until the next dedicated signaling or next first message is received.

In step 408, the user equipment may detect a neighboring cell on the at least one frequency band in the updated second frequency band group when performing the cell reselection.

Alternatively, the first message may also comprise a priority of the at least one frequency band, and the user equipment may detect a neighboring cell on the at least one frequency band according to the priority of the at least one frequency band.

In the embodiments of the present disclosure, the various general and dedicated frequency bands in the first frequency band group carried by the foregoing first message may also correspond to the respective priority, and the user equipment may perform the detection according to the priority order of the various frequency bands contained in the general or dedicated frequency bands when detecting a neighboring cell according to the updated general or dedicated frequency bands.

For example, the general frequency bands in the first frequency band group carried by the first message may comprise five frequency bands and the priority corresponding to the five frequency bands, as shown in Table 1.

**Table 1**

| Frequency band | A₁₁ | A₁₂ | A₁₃ | A₁₄ | A₁₅ |
|---|---|---|---|---|---|
| Priority | Low | High | Middle | Middle | Low |

According to Table 1, when updating the general frequency bands in the second frequency band group stored locally and detecting a neighboring cell according to the general frequency bands, the user equipment may firstly select the frequency band A₁₂ corresponding to the priority "High" which has the highest priority to detect. If it is detected that the signal strength of the neighboring cell corresponding to the frequency band A₁₂ reaches the threshold of performing cell reselection by the user equipment, the user equipment may be switched from the currently connected cell to access the cell corresponding to the frequency band A₁₂. If the neighboring cell corresponding to the frequency band A₁₂ is not detected, or it is detected that the signal strength of the neighboring cell corresponding to the frequency band A₁₂ does not reach the threshold of performing cell reselection by the user equipment, the frequency bands A₁₃ and A₁₄ corresponding to the priority "Middle" which has the second highest priority may be selected to detect a neighboring cell. If it is detected that the signal strength of the neighboring cell corresponding to the frequency bands A₁₃ or A₁₄ is not less than the neighboring cell detection threshold, the user equipment may be switched from the currently connected cell to access the cell whose signal strength is not less than the neighboring cell detection threshold in the neighboring cell corresponding to the frequency bands A₁₃ or A₁₄. If both of the signal strength of the neighboring cell corresponding to the frequency bands A₁₃ or A₁₄ is not less than the neighboring cell detection threshold, the user equipment may be switched from the currently connected cell to access the neighboring cell having higher signal strength or being detected firstly. If the neighboring cells corresponding to the frequency bands A₁₃ and A₁₄ are not detected, or both of the signal strength of the neighboring cell corresponding to the frequency bands A₁₃ and A₁₄ are less than the neighboring cell detection threshold, the frequency bands A₁₁ and A₁₅ corresponding to the priority "Low" may be selected to detect neighboring cell. If the neighboring cells corresponding to the frequency bands A₁₁ and A₁₅ are not detected, or both of the signal strength of the neighboring cell corresponding to the frequency bands A₁₁ and A₁₅ are also less than the neighboring cell detection threshold, the cell currently accessed by the user terminal may be kept and the cell reselection may be ended.

Similarly, if the dedicated frequency bands in the first frequency band group carried by the first message are also corresponding to the respective priority, when the user equipment detects a neighboring cell according to that updated or newly added dedicated frequency, the detection process is similar to the process that the user equipment detects a neighboring cell according to the general frequency bands and its priority, which will not be detailed herein.

Alternatively, the foregoing first message may be a radio resource control connection release (RRC Connection Release) message. In the embodiments of the present disclosure, a preset dedicated signaling field which may be used to carry the foregoing first frequency band group may be added to the RRC Connection Release message. After the RRC Connection Release message is received by the user equipment, if the RRC Connection Release message does not have the dedicated signaling field, the user equipment may detect a neighboring cell according to the general or dedicate frequency band has been stored in the user equipment. If the dedicated signaling field is set in the RRC Connection Release message, the user equipment may firstly update the second frequency band group stored locally according to the dedicated signaling field, and detect a neighboring cell according to the general or dedicated frequency bands in the updated second frequency band group.

Alternatively, the first message may also be other messages that have the same or similar functions as the radio resource control connection release message. The present disclosure does not limit other possible implementations of the first message.

In one scenario that may be implemented, referring to Fig. 1, if the user equipment 120 is in the cell covered by the signal of base station 111, the user equipment 120 may receive a dedicated signaling sent by the system based on the purpose of load balance. The dedicated signaling may provide the dedicated frequency bands that used to detect a neighboring cell to the user equipment 120, for example, the dedicated frequency bands comprise only A₂, the frequency band of the cell supported by the base station 111 is A₁, and the frequency band of the cell supported by the base station 112 is A₂. After the user equipment 120 moves fast from the cell supported by the base station 111 to the cell supported by the base station 112, the currently connected cell may be switched from the cell supported by the base station 111 to the cell supported by the base station 112. If the dedicated signaling received previously has not expired at that time, the user equipment may enter idle state before the dedicated signaling expires, and when detecting a neighboring cell, the user equipment may only detect cells on the frequency band A₂ while it cannot detect a neighboring cell on the general frequency bands that have been stored. However, the cell on the frequency band A₂ may be the cell connected by the user equipment currently, thus the user equipment may not be able to perform cell reselection before the dedicated signaling expires. By the solutions illustrated in the embodiments of the present disclosure, after the cell connected by the user equipment switches from the cell supported by the base station 111 to the cell supported by the base station 112, if the base station 111 judges that there is no need to exchange data between the user equipment 120 and the base station 111, it may send a RRC Connection Release message to the user equipment to switch the user equipment 120 from connected state to idle state. The RRC Connection Release message may comprise frequency bands of various cells supported by the base station located near the current location of the user equipment (i.e., the first frequency band group), and the user equipment 120 may detect a neighboring cell according to the various frequency bands comprised in the RRC Connection Release message when performing cell reselection, avoiding the problem that the user equipment may not be able to detect a neighboring cell successfully resulting from the dedicated signaling hasn't expired while the frequency band of the neighboring cell of the cell connected by the user equipment currently and the frequency band designated by the dedicated signaling to detect signal quality are different.

In another scenario that may be implemented, when a user is in a fast vehicle such as a high-speed train, the user may move a long distance in a short time, while the general and dedicated frequency bands stored in the user's user equipment and the frequency bands of various neighboring cells of the cell accessed currently may be different after the user moves a long distance in a short time. If the general frequency bands in the user equipment have not been updated to be the frequency bands of the surrounding various neighboring cells, the user equipment may not be able to detect a neighboring cell according to the general frequency bands that have been stored even the dedicated frequency bands in the user equipment have expired. By the solutions illustrated in the embodiments of the present disclosure, after the user equipment moves a long distance, if the base station judges that there is no need to exchange data between the user equipment and the base station, it may send a RRC Connection Release message to the user equipment to switch the user equipment from connected state to idle state. The RRC Connection Release message may comprise frequency bands of various cells supported by the base stations located near the current location of the user equipment (i.e., the first frequency band group), and the user equipment may detect a neighboring cell according to the various frequency bands comprised in the RRC Connection Release message when performing cell reselection, avoiding the problem that the user equipment may not be able to detect a neighboring cell successfully after the user equipment moves a long distance in a short time resulting from the general frequency bands is not updated timely and the frequency band of the neighboring cell of the cell connected by the user equipment currently and the frequency band designated by the dedicated signaling to detect signal quality are different.

In summary, a method for detecting a neighboring cell in the cell reselection process is provided in the embodiments of the present disclosure. When the base station detects that the user equipment satisfies a condition to switch from connected state to idle state, it may send a first message to the user equipment to indicate the user equipment to switch from connected state to idle state, and the first message may comprise a first frequency band group which may comprise at least one frequency band; the user equipment may update a second frequency band group which has been stored in the user equipment according to the first frequency band group; the user equipment may detect a neighboring cell on the at least one frequency band in the updated second frequency band group when performing cell reselection. When the user equipment switches to a new cell and the dedicated signaling received previously has not expired, or after the user equipment moves fast to a remote location and accesses a new cell and the general frequency bands stored in the user equipment have not been updated, the general and/or dedicated frequency bands in the user equipment may be updated timely to avoid the problem that the user equipment may not be able to detect a neighboring cell successfully resulting from the frequency band of the neighboring cell of the cell accessed by the user equipment currently and the general and/or dedicated frequency bands in the user equipment are different under the foregoing circumstance, which may improve the success rate that a neighboring cell is detected by the UE and ensure the stability of the communication connection of the UE and a system.

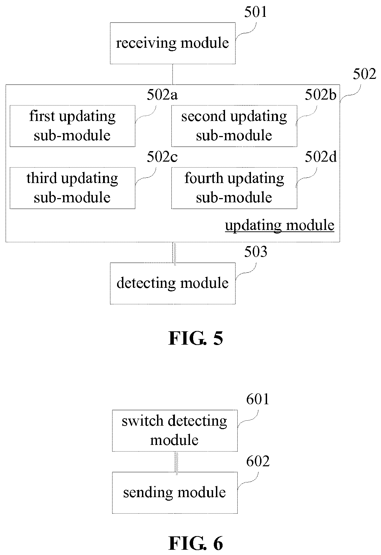

Fig. 5 is a block diagram illustrating a device for detecting a neighboring cell in the cell reselection process according to an exemplary embodiment. The device for detecting a neighboring cell in the cell reselection process may be implemented as the user equipment in the practice environment shown in Fig. 1 in the form of a combination of hardware and software, and may perform all or part of the steps in the embodiments shown in Fig. 2 or Fig. 4 performed by the user equipment. Referring to Fig. 4, the device may comprise: a receiving module 501, an updating module 502 and a detecting module 503.

The receiving module 501 may be configured to receive a first message to indicate the user equipment to switch from connected state to idle state, and the first message may comprise a first frequency band group which may comprise at least one frequency band.

The updating module 502 may be configured to update a second frequency band group which has been stored in the user equipment according to the first frequency band group.

The detecting module 503 may be configured to detect a neighboring cell on the at least one frequency band in the updated second frequency band group when performing cell reselection.

Alternatively, the first message received by the receiving module 501 may further comprise a priority of the at least one frequency band.

The detecting module 503 may be further configured to detect a neighboring cell on the at least one frequency band according to the priority of the at least one frequency band.

Alternatively, the updating module 502 may comprise: a first updating sub-module 502a and a second updating sub-module 502b.

The first updating sub-module 502a may be configured to update general frequency bands in the second frequency band group according to general frequency bands in the first frequency band group, if the second frequency band group comprises general frequency bands while the first frequency band group comprises general frequency bands, and the general frequency bands may comprise various frequency bands that are not designated by the system for the user equipment to detect a neighboring cell.

The second updating sub-module 502b may be configured to update the general frequency bands in the second frequency band group according to the general frequency bands in the first frequency band group and delete dedicated frequency bands in the second frequency band group, if the second frequency band group comprises general and dedicated frequency bands while the first frequency band group comprises general frequency bands, and the dedicated frequency bands may comprise various frequency bands designated by the system for the user equipment to detect a neighboring cell.

Alternatively, the updating module 502 may comprise: a third updating sub-module 502c and a fourth updating sub-module 502d.

The third updating sub-module 502c may be configured to add the dedicated frequency bands in the first frequency band group to the second frequency band group and update the general frequency bands in the second frequency band group according to the general frequency bands in the first frequency band group, if the second frequency band group information comprises general frequency bands while the first frequency band group information comprises general and dedicated frequency bands. The general frequency bands may comprise various frequency bands that are not designated by a system for the user equipment to detect a neighboring cell, and the dedicated frequency bands may comprise various frequency bands designated by the system for the user equipment to detect a neighboring cell.

The fourth updating sub-module 502d may be configured to update the general and dedicated frequency bands in the second frequency band group according to the general and dedicated frequency bands in the first frequency band group respectively, if the second frequency band group comprises general and dedicated frequency bands while the first frequency band group information comprises general and dedicated frequency bands.

Alternatively, the first message may be a radio resource control connection release (RRC Connection Release) message.

In summary, a device for detecting neighboring cell in cell reselection process is provided in the embodiments of the present disclosure. The user equipment may receive a first message to indicate the user equipment to switch from connected state to idle state, and the first message may comprise a first frequency band group which may comprise at least one frequency band; the user equipment may update a second frequency band group which has been stored in the user equipment according to the first frequency band group; the user equipment may detect a neighboring cell on the at least one frequency band in the updated second frequency band group when performing cell reselection. When the user equipment switches to a new cell and the dedicated signaling received previously has not expired, or after the user equipment moves fast to a remote location and accesses a new cell and the general frequency bands stored in the user equipment have not been updated, the general and/or dedicated frequency bands in the user equipment may be updated timely to avoid the problem that the user equipment may not be able to detect a neighboring cell successfully resulting from the frequency band of the neighboring cell of the cell accessed by the user equipment currently and the general and/or dedicated frequency bands in the user equipment are different under the foregoing circumstance, which may improve the success rate that a neighboring cell is detected by the UE and ensure the stability of the communication connection of the UE and system.

Fig. 6 is a block diagram illustrating a device for detecting a neighboring cell in the cell reselection process according to an exemplary embodiment. The device for detecting a neighboring cell in the cell reselection process may be implemented as the user equipment in the practice environment shown in Fig. 1 in the form of a combination of hardware and software, and may perform all or part of the steps in the embodiments shown in Fig. 3 performed by the user equipment. Referring to Fig. 6, the device may comprise: a switch detecting module 601 and a sending module 602.

The switch detecting module 601 may be configured to detect whether the user equipment satisfies a condition to switch from connected state to idle state.

The sending module 602 may be configured to send the user equipment a first message which indicates the user equipment to switch from connected state to idle state if the user equipment satisfies the condition to switch from connected state to idle state, and the first message may comprise a first frequency band group which may comprise at least one frequency band.

Alternatively, the first message may be a radio resource control connection release (RRC Connection Release) message.

In summary, a device for detecting a neighboring cell in the cell reselection process is provided in the embodiments of the present disclosure. When the base station detects that the user equipment satisfies a condition to switch from connected state to idle state, it may send a first message to the user equipment to indicate the user equipment to switch from connected state to idle state, and the first message may comprise a first frequency band group which may comprise at least one frequency band; the user equipment may update a second frequency band group which has been stored in the user equipment according to the first frequency band group; the user equipment may detect a neighboring cell on the at least one frequency band in the updated second frequency band group when performing cell reselection. When the user equipment switches to a new cell and the dedicated signaling received before has not expired, or after the user equipment moves fast to a remote location and accesses a new cell and the general frequency bands stored in the user equipment have not been updated, the general and/or dedicated frequency bands in the user equipment may be updated timely to avoid the problem that the user equipment may not be able to detect a neighboring cell successfully resulting from the frequency band of the neighboring cell of the cell accessed by the user equipment currently and the general and/or dedicated frequency bands in the user equipment are different under the foregoing circumstance, which may improve the success rate that a neighboring cell is detected by the UE and ensure the stability of the communication connection of the UE and system.

A device for detecting a neighboring cell in the cell reselection process is also provided in an exemplary embodiment of the present disclosure, which may implement the method for detecting a neighboring cell in the cell reselection process provided in the embodiments of the present disclosure. The device may be applied in a user equipment and may comprise: a processor and a memory for storing processor-executable instructions. The processor may be configured to: receive a first message to indicate the user equipment to switch from connected state to idle state, and the first message may comprise a first frequency band group which may comprise at least one frequency band; update a second frequency band group which has been stored in the user equipment according to the first frequency band group; detect a neighboring cell according to the at least one frequency band when performing cell reselection.

Alternatively, the first message may further comprise: a priority of the at least one frequency band, and the detecting a neighboring cell according to the at least one frequency band may comprise: detecting a neighboring cell according to the at least one frequency band and its priority.

Alternatively, the updating a second frequency band group according to the first frequency band group may comprise: the first frequency band group comprises general frequency bands which comprises various frequency bands that are not designated by a system for the user equipment to detect a neighboring cell; updating general frequency bands in the second frequency band group according to the general frequency bands in the first frequency band group if the second frequency band group comprises general frequency bands; updating the general frequency bands in the second frequency band group information according to the general frequency bands in the first frequency band group and deleting the dedicated frequency bands in the second frequency band group information if the second frequency band group comprises general and dedicated frequency bands, the dedicated frequency bands may comprise various frequency bands designated by the system for the user equipment to detect a neighboring cell.

Alternatively, the updating the second frequency band group according to the first frequency band group may comprise: the first frequency band group comprises general and dedicated frequency bands; adding the dedicated frequency bands to the second frequency band group and updating the general frequency bands in the second frequency band group according to the general frequency bands in the first frequency band group if the second frequency band group comprises general frequency bands; updating the general and dedicated frequency bands in the second frequency band group according to the general and dedicated frequency bands in the first frequency band group respectively if the second frequency band group comprises the general and dedicated frequency bands

Alternatively, the first message may be a radio resource control connection release (RRC Connection Release) message.

Another device for detecting a neighboring cell in the cell reselection process is also provided in an exemplary embodiment of the present disclosure, which may implement the method for detecting a neighboring cell in the cell reselection process provided in the embodiments of the present disclosure. The device may be applied in a base station and may comprise: a processor and a memory for storing processor-executable instructions. The processor may be configured to: detect whether a user equipment satisfies a condition to switch from connected state to idle state; send the user equipment a first message which may indicate the user equipment to switch from connected state to idle state if the user equipment satisfies the condition to switch from connected state to idle state, the first message may comprise a first frequency band group which may comprise at least one frequency band.

It should be noted that when performing the method for detecting a neighboring cell in the cell reselection process, the device provided in the foregoing embodiments is only illustrated by means of the division of the forgoing various function modules. In practical applications, the foregoing function allocation may be completed by different function modules according to the actual needs, i.e., the structure of the device may be divided into different function modules to implement all or part of the described functions.

As to the device in the foregoing embodiments, the specific ways that the various modules perform operations have been described in detail in the embodiments related to the method, which will not be detailed herein.

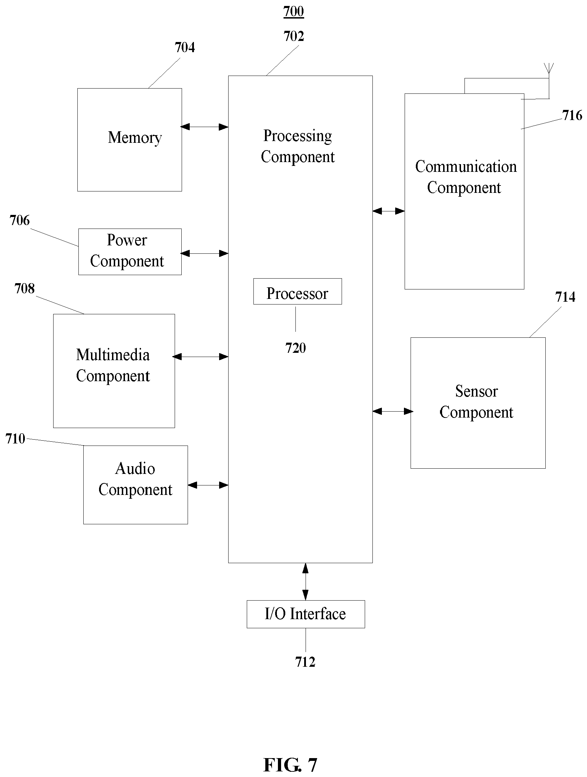

Fig. 7 is a block diagram of a device 700 illustrated according to an exemplary embodiment. For example, the device 700 may be an electronic device such as smart phone, wearable device, smart television and on-board terminal.

Referring to Fig. 7, the device 700 may comprise one or more of the following components: a processing component 702, a memory 704, a power component 706, a multimedia component 708, an audio component 710, an input/output (I/O) interface 712, a sensor component 714, and a communication component 716.

The processing component 702 typically controls overall operation of the device 700, such as the operations associated with display, telephone call, data communications, camera operations and recording operations. The processing element 702 may comprise one or more processors 720 to execute instructions to perform all or part of the steps in the above described methods. Additionally, the processing component 702 may comprise one or more modules which facilitate the interaction between the processing component 702 and other components. For instance, the processing component 702 may comprise multimedia module to facilitate the interaction between the multimedia component 708 and the processing component 702.

The memory 704 is configured to store various types of data to support the operation of the device 700. Examples of such data comprise instructions for any applications or methods operated on the device 700, contacts data, phonebook data, messages, images, videos, etc. The memory 704 may be implemented using any type of volatile or non-volatile memory devices or a combination thereof, such as a static random access memory (SRAM), an electrically erasable programmable read only memory (EEPROM), an erasable programmable read only memory (EPROM), a programmable read-only memory (PROM), a read-only memory (ROM), a magnetic memory, a flash memory, a magnetic disk or optical disk.

The power component 706 provides power to various components of the device 700. The power component 706 may comprise a power management system, one or more power sources, and any other components associated with the generation, management, and distribution of power in the device 700

The multimedia component 708 comprises a screen providing an output interface between the device 700 and the user. In some embodiments, the screen may comprise a liquid crystal display (LCD) and a touch panel (TP). If the screen comprises the touch panel, the screen may be implemented as a touch screen to receive input signal from the users. The touch panel comprises one or more touch sensors to sense touches, swipes and gestures on the touch panel. The touch sensor may not only sense a boundary of a touch or swipe action, but also detect the duration and pressure associated with the touch or swipe operation. In some embodiments, the multimedia component 708 comprises one front camera and/or rear camera. When the device 700 is in an operation mode, such as a shooting mode or a video mode, the front camera and/or rear camera may receive external multimedia data. Each front camera and rear camera may be a fixed optical lens system or have focal length and optical zoom capability.

The audio component 710 is configured to output and/or input audio signals. For example, the audio component 710 comprises a microphone (MIC) configured to receive an external audio signal when the device 700 is in an operation mode, such as a call mode, a recording mode and a voice recognition mode. The received audio signal may be further stored in the memory 704 or transmitted via the communication component 716. In some embodiments, the audio component 710 further comprises a speaker to output audio signals.

The I/O interface 712 provides an interface between the processing component 702 and peripheral interface modules, such as a keyboard, a click wheel, buttons, and the like. The buttons may comprise, but are not limited to: a home button, a volume button, a starting button, and a locking button.

The sensor component 714 comprises one or more sensors to provide various aspects of state assessments for the device 700. For instance, the sensor component 714 may detect an open/closed state of the device 700, relative positioning of components, such as the display and the keypad of the device 700, the sensor component 714 may also detect a position change of the device 700 or a component thereof, a presence or absence of a contact between the user and the device 700, an orientation or acceleration/deceleration of the device 700, and a temperature change of the device 700. The sensor component 714 may comprise a proximity sensor configured to detect the presence of nearby objects without any physical contact. The sensor component 714 may further comprise a light sensor, such as a CMOS or CCD image sensor, for use in imaging applications. In some embodiments, the sensor component 714 may further comprise an accelerometer sensor, a gyroscope sensor, a magnetic sensor, a pressure sensor, a microwave sensor, or a temperature sensor.

The communication component 716 is configured to facilitate the device 700 to communication, wired or wirelessly, with other devices. The device 700 can access a communication standard based wireless network, such as WiFi, 2G, or 3G, or a combination thereof. In one exemplary embodiment, the communication component 716 receives a broadcast signal from an external broadcast management system or broadcasts the associated information via a broadcast channel. In one exemplary embodiment, the communication component 716 further comprises a near field communication (NFC) module to facilitate short-range communication. For example, the NFC module may be implemented based on radio frequency identification (RFID) technique, infrared data association (IrDA) technique, ultra-wideband (UWB) technique, Bluetooth (BT) technique, and other techniques.

In an exemplary embodiment, the device 700 may be implemented with one or more application specific integrated circuits (ASIC), digital signal processors (DSP), digital signal processing devices (DSPD), programmable logic devices (PLD), field programmable gate arrays (FPGA), controllers, micro-controllers, microprocessors, or other electronic components, for performing the above described methods.

In an exemplary embodiment, there is also provided a non-transitory computer-readable storage medium including instructions, such as the memory 704 including instructions, the instructions can be executed by the processor 720 of the device 700 to implement the above described methods. For example, the non-transitory computer-readable storage medium may be a ROM, a random access memory (RAM), a CD-ROM, a magnetic tape, a floppy disc, and an optical data storage device, etc.

A non-transitory computer-readable storage medium, when the instruction in the storage medium is executed by the processor of the device 700, enable the device 700 performs the foregoing method for detecting a neighboring cell in the cell reselection process performed by the user equipment.

Where functional modules are referred to in apparatus embodiments for carrying out various steps of the described methods(s) it will be understood that these modules may be implemented in hardware, in software, or a combination of the two. When implemented in hardware, the modules may be implemented as one more hardware modules, such as one or more application specific integrated circuits. When implemented in software, the modules may be implement as one or more computer programs that are executed on one or more processors.

Other embodiments of the present disclosure will be apparent to those skilled in the art from consideration of the specification and practice of the invention disclosed herein. The present disclosure is intended to cover any variations, uses or adaptations of the present disclosure, and these variations, uses and adaptations follow the general principles of the present disclosure and comprise common general knowledge and conventional techniques of the art which are not disclosed herein. The specification and the embodiments are only considered as exemplary, and the true scope of the present disclosure are indicated by the following claims.

It should be appreciated that the present disclosure is not limited to the exact structures that have been described above and illustrated in the accompanying drawings, and that various modifications and changes can be made without departing from the scope thereof. It is intended that the scope of the present disclosure is only limited by the appended claims.

## Claims

1. A method performed by a user equipment for improving the detection of a neighboring cell in a cell reselection process, the method comprising:
receiving (403) a first message to indicate the user equipment to switch from a connected state to an idle state, the first message comprising a first frequency band group which comprises at least one frequency band;
updating (404-407) a second frequency band group which has been stored in the user equipment according to the first frequency band group; and
detecting (408) a neighboring cell on the at least one frequency band in the updated second frequency band group when performing cell reselection, **characterized in that** the updating a second frequency band group which has been stored in the user equipment according to the first frequency band group comprises:
updating (404) general frequency bands in the second frequency band group according to the general frequency bands in the first frequency band group if the second frequency band group only comprises general frequency bands while the first frequency band group comprises general frequency bands which comprise various frequency bands that are not designated by a system for the user equipment to detect a neighboring cell;
updating (405) the general frequency bands in the second frequency band group according to the general frequency bands in the first frequency band group and deleting dedicated frequency bands in the second frequency band group if the second frequency band group comprises general and dedicated frequency bands while the first frequency band group comprises general frequency bands, the dedicated frequency bands comprising various frequency bands designated by the system for the user equipment to detect a neighboring cell;
adding (406) the dedicated frequency bands in the first frequency band group to the second frequency band group and updating the general frequency bands in the second frequency band group according to the general frequency bands in the first frequency band group if the second frequency band group only comprises general frequency bands while the first frequency band group comprises general and dedicated frequency bands; and
updating (407) the general and dedicated frequency bands in the second frequency band group according to the general and dedicated frequency bands in the first frequency band group respectively if the second frequency band group comprises general and dedicated frequency bands while the first frequency band group comprises general and dedicated frequency bands.

2. The method of claim 1, **characterized in that** the first message further comprises: a priority of the at least one frequency band, and the detecting (408) a neighboring cell on the at least one frequency band in the updated second frequency band group comprises:
detecting a neighboring cell on the at least one frequency band according to the priority of the at least one frequency band.

3. The method of any preceding claim, **characterized in that** the first message is a radio resource control, RRC, Connection Release message.

4. A device applied in a user equipment for improving the detection of a neighboring cell in a cell reselection process, the device comprising:
a receiving module (501) configured to receive a first message to indicate the user equipment to switch from a connected state to an idle state, the first message comprising a first frequency band group which comprises at least one frequency band;
an updating module (502) configured to update a second frequency band group that has been stored in the user equipment according to the first frequency band group; and
a detecting module (503) configured to detect a neighboring cell on the at least one frequency band in the updated second frequency band group when performing cell reselection, characterized that the updating module (502) comprises:
a first updating sub-module (502a) configured to: update general frequency bands in the second frequency band group according to general frequency bands in the first frequency band group, if the second frequency band group only comprises general frequency bands while the first frequency band group comprises general frequency bands, the general frequency bands comprising various frequency bands that are not designated by a system for the user equipment to detect a neighboring cell; and
a second updating sub-module (502b) configured to: update the general frequency bands in the second frequency band group according to the general frequency bands in the first frequency band group and delete dedicated frequency bands in the second frequency band group, if the second frequency band group comprises general and dedicated frequency bands while the first frequency band group comprises general frequency bands, the dedicated frequency bands comprising various frequency bands designated by the system for the user equipment to detect a neighboring cell;
a third updating sub-module (502c) configured to: add the dedicated frequency bands in the first frequency band group to the second frequency band group and update the general frequency bands in the second frequency band group according to the general frequency bands in the first frequency band group, if the second frequency band group information only comprise general frequency bands while the first frequency band group information comprises general and dedicated frequency bands; and
a fourth updating sub-module (502d) configured to: update the general and dedicated frequency bands in the second frequency band group according to the general and dedicated frequency bands in the first frequency band group respectively, if the second frequency band group comprises general and dedicated frequency bands while the first frequency band group information comprises general and dedicated frequency bands.

5. The device of claim 4, **characterized in that** the first message received by the receiving module (501) further comprises: a priority of the at least one frequency band, and the device comprises:
the detecting module (503) further configured to detect a neighboring cell on the at least one frequency band according to the priority of the at least one frequency band.

6. The device of any of claims 4 to 5, **characterized in that** the first message is a radio resource control ,RRC, Connection Release message.

7. The device of any of claims 4 to 6, **characterized in that** the device comprises:
a processor;
a memory for storing processor-executable instructions;
wherein the processor comprises the receiving module (501), the updating module (502) and the detecting module (503).

## Patentansprüche

1. Verfahren, durch eine Benutzereinrichtung durchgeführt, zum Verbessern der Erkennung einer Nachbarzelle in einem Prozess zur Auswahl einer neuen Funkzelle, wobei das Verfahren umfasst:
Empfangen (403) einer ersten Nachricht zum Anzeigen der Benutzereinrichtung zum Umschalten von einem verbundenen Zustand auf einen Leerlaufzustand, wobei die erste Nachricht eine erste Frequenzbandgruppe umfasst, die wenigstens ein Frequenzband umfasst;
Aktualisieren (404 - 407) einer zweiten Frequenzbandgruppe, die in der Benutzereinrichtung gespeichert wurde, gemäß der ersten Frequenzbandgruppe; und
Erkennen (408) einer Nachbarzelle auf dem wenigstens einen Frequenzband in der aktualisierten zweiten Frequenzbandgruppe beim Durchführen der Auswahl einer neuen Funkzelle,
**dadurch gekennzeichnet, dass**
das Aktualisieren einer zweiten Frequenzbandgruppe, die in der Benutzereinrichtung gespeichert wurde, gemäß der ersten Frequenzbandgruppe Folgendes umfasst:
Aktualisieren (404) allgemeiner Frequenzbänder in der zweiten Frequenzbandgruppe gemäß den allgemeinen Frequenzbändern in der ersten Frequenzbandgruppe, falls die zweite Frequenzbandgruppe nur allgemeine Frequenzbänder umfasst, während die erste Frequenzbandgruppe allgemeine Frequenzbänder umfasst, die verschiedene Frequenzbänder umfassen, die nicht von einem System für die Benutzereinrichtung zur Erkennung einer Nachbarzelle bestimmt sind;
Aktualisieren (405) der allgemeinen Frequenzbänder in der zweiten Frequenzbandgruppe gemäß den allgemeinen Frequenzbändern in der ersten Frequenzbandgruppe und Löschen dedizierter Frequenzbänder in der zweiten Frequenzbandgruppe, falls die zweite Frequenzbandgruppe allgemeine und dedizierte Frequenzbänder umfasst, während die erste Frequenzbandgruppe allgemeine Frequenzbänder umfasst, wobei die dedizierten Frequenzbänder verschiedene Frequenzbänder umfassen, die von dem System für die Benutzereinrichtung zur Erkennung einer Nachbarzelle bestimmt sind;
Hinzufügen (406) der dedizierten Frequenzbänder in der ersten Frequenzbandgruppe zur zweiten Frequenzbandgruppe und Aktualisieren der allgemeinen Frequenzbänder in der zweiten Frequenzbandgruppe gemäß den allgemeinen Frequenzbändern in der ersten Frequenzbandgruppe, falls die zweite Frequenzbandgruppe nur allgemeine Frequenzbänder umfasst, während die erste Frequenzbandgruppe allgemeine und dedizierte Frequenzbänder umfasst; und
Aktualisieren (407) der allgemeinen und dedizierten Frequenzbänder in der zweiten Frequenzbandgruppe gemäß den allgemeinen bzw. dedizierten Frequenzbändern in der ersten Frequenzbandgruppe, falls die zweite Frequenzbandgruppe allgemeine und dedizierte Frequenzbänder umfasst, während die erste Frequenzbandgruppe allgemeine und dedizierte Frequenzbänder umfasst.

2. Verfahren nach Anspruch 1, **dadurch gekennzeichnet, dass** die erste Nachricht ferner Folgendes umfasst: eine Priorität des wenigstens einen Frequenzbands, und das Erkennen (408) einer Nachbarzelle auf dem wenigstens einen Frequenzband in der aktualisierten zweiten Frequenzbandgruppe Folgendes umfasst:
Erkennen einer Nachbarzelle auf dem wenigstens einen Frequenzband gemäß der Priorität des wenigstens einen Frequenzbands.

3. Verfahren nach einem der vorhergehenden Ansprüche, **dadurch gekennzeichnet, dass** die erste Nachricht eine Funkressourcensteuerungs- (Radio Resource Control: RRC) -Verbindungsfreigabenachricht ist.

4. Vorrichtung, die in einer Benutzereinrichtung zum Verbessern der Erkennung einer Nachbarzelle in einem Prozess zur Auswahl einer neuen Funkzelle angewendet wird, wobei die Vorrichtung umfasst:
ein Empfangsmodul (501), das konfiguriert ist zum Empfangen einer ersten Nachricht zum Anzeigen der Benutzereinrichtung zum Umschalten von einem verbundenen Zustand auf einen Leerlaufzustand, wobei die erste Nachricht eine erste Frequenzbandgruppe umfasst, die wenigstens ein Frequenzband umfasst;
ein Aktualisierungsmodul (502), das konfiguriert ist zum Aktualisieren einer zweiten Frequenzbandgruppe, die in der Benutzereinrichtung gespeichert wurde, gemäß der ersten Frequenzbandgruppe; und
ein Erkennungsmodul (503), das konfiguriert ist zum Erkennen einer Nachbarzelle auf dem wenigstens einen Frequenzband in der aktualisierten zweiten Frequenzbandgruppe beim Durchführen der Auswahl einer neuen Funkzelle,
**dadurch gekennzeichnet, dass** das Aktualisierungsmodul (502) Folgendes umfasst:
ein erstes Aktualisierungsuntermodul (502a), das konfiguriert ist zum: Aktualisieren allgemeiner Frequenzbänder in der zweiten Frequenzbandgruppe gemäß allgemeinen Frequenzbändern in der ersten Frequenzbandgruppe, falls die zweite Frequenzbandgruppe nur allgemeine Frequenzbänder umfasst, während die erste Frequenzbandgruppe allgemeine Frequenzbänder umfasst, wobei die allgemeinen Frequenzbänder verschiedene Frequenzbänder umfassen, die nicht von einem System für die Benutzereinrichtung zur Erkennung einer Nachbarzelle bestimmt sind;
ein zweites Aktualisierungsuntermodul (502b), das konfiguriert ist zum: Aktualisieren der allgemeinen Frequenzbänder in der zweiten Frequenzbandgruppe gemäß den allgemeinen Frequenzbändern in der ersten Frequenzbandgruppe und Löschen dedizierter Frequenzbänder in der zweiten Frequenzbandgruppe, falls die zweite Frequenzbandgruppe allgemeine und dedizierte Frequenzbänder umfasst, während die erste Frequenzbandgruppe allgemeine Frequenzbänder umfasst, wobei die dedizierten Frequenzbänder verschiedene Frequenzbänder umfassen, die von dem System für die Benutzereinrichtung zur Erkennung einer Nachbarzelle bestimmt sind;
ein drittes Aktualisierungsuntermodul (502c), das konfiguriert ist zum: Hinzufügen der dedizierten Frequenzbänder in der ersten Frequenzbandgruppe zur zweiten Frequenzbandgruppe und Aktualisieren der allgemeinen Frequenzbänder in der zweiten Frequenzbandgruppe gemäß den allgemeinen Frequenzbändern in der ersten Frequenzbandgruppe, falls die Informationen der zweiten Frequenzbandgruppe nur allgemeine Frequenzbänder umfassen, während die Informationen der ersten Frequenzbandgruppe allgemeine und dedizierte Frequenzbänder umfassen; und
ein viertes Aktualisierungsuntermodul (502d), das konfiguriert ist zum: Aktualisieren der allgemeinen und dedizierten Frequenzbänder in der zweiten Frequenzbandgruppe gemäß den allgemeinen bzw. dedizierten Frequenzbändern in der ersten Frequenzbandgruppe, falls die zweite Frequenzbandgruppe allgemeine und dedizierte Frequenzbänder umfasst, während die Informationen der ersten Frequenzbandgruppe allgemeine und dedizierte Frequenzbänder umfassen.

5. Vorrichtung nach Anspruch 4, **dadurch gekennzeichnet, dass** die durch das Empfangsmodul (501) empfangene erste Nachricht ferner Folgendes umfasst: eine Priorität des wenigstens einen Frequenzbands, und wobei die Vorrichtung Folgendes umfasst:
das Erkennungsmodul (503), das ferner konfiguriert ist zum Erkennen einer Nachbarzelle auf dem wenigstens einen Frequenzband gemäß der Priorität des wenigstens einen Frequenzbands.

6. Vorrichtung nach einem der Ansprüche 4 bis 5, **dadurch gekennzeichnet, dass** die erste Nachricht eine Funkressourcensteuerungs- (Radio Resource Control: RRC) -Verbindungsfreigabenachricht ist.

7. Vorrichtung nach einem der Ansprüche 4 bis 6, **dadurch gekennzeichnet, dass** die Vorrichtung Folgendes umfasst:
einen Prozessor;
einen Speicher zum Speichern von prozessorausführbaren Anweisungen;
wobei der Prozessor das Empfangsmodul (501), das Aktualisierungsmodul (502) und das Erkennungsmodul (503) umfasst.

## Revendications

1. Procédé exécuté par un équipement utilisateur pour améliorer la détection d'une cellule voisine dans un processus de resélection cellulaire, le procédé comprenant :
la réception (403) d'un premier message pour indiquer à l'équipement utilisateur de commuter d'un état connecté à un état inactif, le premier message comprenant un premier groupe de bandes de fréquences qui comprend au moins une bande de fréquences ;
l'actualisation (404-407) d'un second groupe de bandes de fréquences qui a été mémorisé dans l'équipement utilisateur conformément au premier groupe de bandes de fréquences ; et la détection (408) d'une cellule voisine sur l'au moins une bande de fréquences dans le second groupe de bandes de fréquences actualisé lors de l'exécution d'une resélection cellulaire,
**caractérisé en ce que**
l'actualisation d'un second groupe de bandes de fréquences qui a été mémorisé dans l'équipement utilisateur conformément au premier groupe de bandes de fréquences comprend :
l'actualisation (404) de bandes de fréquences générales dans le second groupe de bandes de fréquences conformément aux bandes de fréquences générales dans le premier groupe de bandes de fréquences si le second groupe de bandes de fréquences comprend uniquement des bandes de fréquences générales tandis que le premier groupe de bandes de fréquences comprend des bandes de fréquences générales qui comprennent diverses bandes de fréquences qui ne sont pas désignées par un système de l'équipement utilisateur pour détecter une cellule voisine ;
l'actualisation (405) des bandes de fréquences générales dans le second groupe de bandes de fréquences conformément aux bandes de fréquences générales dans le premier groupe de bandes de fréquences et la suppression de bandes de fréquences dédiées dans le second groupe de bandes de fréquences si le second groupe de bandes de fréquences comprend des bandes de fréquences générales et dédiées tandis que le premier groupe de bandes de fréquences comprend des bandes de fréquences générales, les bandes de fréquences dédiées comprenant diverses bandes de fréquences désignées par le système de l'équipement utilisateur pour détecter une cellule voisine ;
l'ajout (406) des bandes de fréquences dédiées dans le premier groupe de bandes de fréquences au second groupe de bandes de fréquences et l'actualisation des bandes de fréquences générales dans le second groupe de bandes de fréquences conformément aux bandes de fréquences générales dans le premier groupe de bandes de fréquences si le second groupe de bandes de fréquences comprend uniquement des bandes de fréquences générales tandis que le premier groupe de bandes de fréquences comprend des bandes de fréquences générales et dédiées ; et
l'actualisation (407) des bandes de fréquences générales et dédiées dans le second groupe de bandes de fréquences conformément aux bandes de fréquences générales et dédiées dans le premier groupe de bandes de fréquences respectivement si le second groupe de bandes de fréquences comprend des bandes de fréquences générales et dédiées tandis que le premier groupe de bandes de fréquences comprend des bandes de fréquences générales et dédiées.

2. Procédé selon la revendication 1, **caractérisé en ce que** le premier message comprend en outre : une priorité de l'au moins une bande de fréquences, et la détection (408) d'une cellule voisine sur l'au moins une bande de fréquences dans le second groupe de bandes de fréquences actualisé comprend :
la détection d'une cellule voisine sur l'au moins une bande de fréquences conformément à la priorité de l'au moins une bande de fréquences.

3. Procédé selon l'une quelconque des revendications précédentes, **caractérisé en ce que** le premier message est un message de libération de connexion de commande de ressources radio, RRC.

4. Dispositif appliqué dans un équipement utilisateur pour améliorer la détection d'une cellule voisine dans un processus de resélection cellulaire, le dispositif comprenant :
un module de réception (501) configuré pour recevoir un premier message pour indiquer à l'équipement utilisateur de commuter d'un état connecté à un état inactif, le premier message comprenant un premier groupe de bandes de fréquences qui comprend au moins une bande de fréquences ;
un module d'actualisation (502) configuré pour actualiser un second groupe de bandes de fréquences qui a été mémorisé dans l'équipement utilisateur conformément au premier groupe de bandes de fréquences ; et
un module de détection (503) configuré pour détecter une cellule voisine sur l'au moins une bande de fréquences dans le second groupe de bandes de fréquences actualisé lors de l'exécution d'une resélection cellulaire,
**caractérisé en ce que** le module d'actualisation (502) comprend :
un premier sous-module d'actualisation (502) configuré pour : actualiser des bandes de fréquences générales dans le second groupe de bandes de fréquences conformément à des bandes de fréquences générales dans le premier groupe de bandes de fréquences si le second groupe de bandes de fréquences comprend uniquement des bandes de fréquences générales tandis que le premier groupe de bandes de fréquences comprend des bandes de fréquences générales, les bandes de fréquences générales comprenant diverses bandes de fréquences qui ne sont pas désignées par un système de l'équipement utilisateur pour détecter une cellule voisine ; et
un deuxième sous-module d'actualisation (502b) configuré pour : actualiser les bandes de fréquences générales dans le second groupe de bandes de fréquences conformément aux bandes de fréquences générales dans le premier groupe de bandes de fréquences et supprimer des bandes de fréquences dédiées dans le second groupe de bandes de fréquences si le second groupe de bandes de fréquences comprend des bandes de fréquences générales et dédiées tandis que le premier groupe de bandes de fréquences comprend des bandes de fréquences générales, les bandes de fréquences dédiées comprenant diverses bandes de fréquences désignées par le système de l'équipement utilisateur pour détecter une cellule voisine ;
un troisième sous-module d'actualisation (502c) configuré pour : ajouter les bandes de fréquences dédiées dans le premier groupe de bandes de fréquences au second groupe de bandes de fréquences et actualiser les bandes de fréquences générales dans le second groupe de bandes de fréquences conformément aux bandes de fréquences générales dans le premier groupe de bandes de fréquences si le second groupe de bandes de fréquences comprend uniquement des bandes de fréquences générales tandis que le premier groupe de bandes de fréquences comprend des bandes de fréquences générales et dédiées ; et
un quatrième sous-module d'actualisation (502d) configuré pour : actualiser les bandes de fréquences générales et dédiées dans le second groupe de bandes de fréquences conformément aux bandes de fréquences générales et dédiées dans le premier groupe de bandes de fréquences respectivement, si le second groupe de bandes de fréquences comprend des bandes de fréquences générales et dédiées tandis que le premier groupe de bandes de fréquences comprend des bandes de fréquences générales et dédiées.

5. Dispositif selon la revendication 4, **caractérisé en ce que** le premier message reçu par le module de réception (501) comprend en outre : une priorité de l'au moins une bande de fréquences, et le dispositif comprend :
le module de détection (503) configuré en outre pour détecter une cellule voisine sur l'au moins une bande de fréquences conformément à la priorité de l'au moins une bande de fréquences.

6. Dispositif selon l'une quelconque des revendications 4 à 5, **caractérisé en ce que** le premier message est un message de libération de connexion de commande de ressources radio, RRC.

7. Dispositif selon l'une quelconque des revendications 4 à 6, **caractérisé en ce que** le dispositif comprend :
un processeur ;
une mémoire pour mémoriser des instructions exécutables par processeur ;
dans lequel le processeur comprend le module de réception (501), le module d'actualisation (502) et le module de détection (503).
